# EUROPÄISCHE PATENTSCHRIFT

(11) **EP 0 856 442 B1**
(45) Veröffentlichungstag und Bekanntmachung des Hinweises auf die Patenterteilung: **28.08.2002**
(21) Anmeldenummer: 98100823.8
(22) Anmeldetag: 19.01.1998
(51) Int. Cl.: B60R 22/34

(54) **Rahmen für einen Gurtaufroller eines Fahrzeug-Sicherheitsgurtsystems**
Frame for a belt retractor of a vehicle seat belt system
Chassis pour un rétracteur de ceinture d'un système de ceinture de sécurité pour un véhicule

(30) Priorität: 03.02.1997 DE 29701841 U
(43) Veröffentlichungstag der Anmeldung: 05.08.1998
(73) Patentinhaber: TRW Occupant Restraint Systems GmbH & Co. KG, 73551 Alfdorf (DE)
(72) Erfinder: Weller, Hermann-Karl, 73553 Alfdorf (DE)
(74) Vertreter: Degwert, Hartmut, Dipl.-Phys.

(56) Entgegenhaltungen:
- EP-A- 0 165 621
- DE-A- 19 510 603

## Beschreibung

Die Erfindung betrifft einen Rahmen für einen Gurtaufroller eines Fahrzeug-Sicherheitsgurtsystems, mit zwei Seitenteilen, einer diese miteinander verbindenden Rückwand und einer Fixierungslasche, deren eines Ende mit der Rückwand verbunden ist.

Gurtaufroller für ein Fahrzeug-Sicherheitsgurtsystem sowie deren Rahmen sind im Stand der Technik bekannt, z.B. aus DE-A1-195 10 603, so daß auf ihre Gestaltung und ihre Funktionsweise hier nur kurz eingegangen werden muß. Der Rahmen für einen Gurtaufroller besteht üblicherweise aus einem U-förmigen Blechteil, in dessen beiden Seitenteilen eine Gurtspule gelagert ist, auf der der Sicherheitsgurt aufgewickelt werden kann. Die die beiden Seitenteile miteinander verbindende Rückwand des Rahmens wird üblicherweise mit der Karosserie des Fahrzeugs verschraubt.

Zur Erleichterung der Montage des Gurtaufrollers kann an der Rückwand seines Rahmens eine Fixierungslasche vorgesehen sein, die aus der Ebene der Rückwand zu der von den Seitenteilen abgewandten Seite herausgebogen ist. Diese Fixierungslasche ist mit einer Öffnung versehen, die auf einen Klips aufgesteckt werden kann, so daß der Gurtaufroller vorläufig am Fahrzeug fixiert ist. Diese Fixierungslasche ist als "fliegender Lappen" ausgestaltet, also nur mit einem Ende mit der Rückwand des Rahmens verbunden. Als nachteilig hat sich dabei zum einen herausgestellt, daß die Festigkeit der Fixierungslasche bei Belastungen senkrecht zur Rückwand des Rahmens nicht ausreichend ist. Wenn beispielsweise die Öffnung der Fixierungslasche nicht exakt auf den Klips aufgesetzt wird, kann dadurch die Fixierungslasche verbogen werden. Die Fixierungslasche kann auch während des Transports des Rahmens oder des Gurtaufrollers verbogen werden. Eine Versteifung der Fixierungslasche durch Sicken oder Einprägungen hat sich als nicht ausreichend erwiesen. Auch ist es nur begrenzt möglich, die Fixierungslasche tiefzuziehen, da mittels Tiefziehen nur eine geringe Entfernung der Fixierungslasche von der Ebene der Rückwand erzielbar ist. Zum anderen hat sich als nachteilig herausgestellt, daß die Rahmen dazu neigen, sich mittels ihrer Fixierungslaschen aneinander zu verhaken, insbesondere beim Transport.

Die Erfindung schafft einen Rahmen, dessen Fixierungslasche besonders stabil ist und sich nicht mit der Fixierungslasche anderer Rahmen verhaken kann. Gemäß der Erfindung ist zu diesem Zweck vorgesehen, daß das zweite Ende der Fixierungslasche mit einem Versteifungsstreifen versehen ist, der wiederum mit der Rückwand verbunden ist. Dieser Versteifungsstreifen kann in besonders einfacher Weise bei der Fertigung des Rahmens aus dem Material für die Rückwand ausgestanzt werden. Es fallen keine zusätzlichen Fertigungsschritte an, und das Gewicht des Rahmens wird lediglich geringfügig erhöht. Die Verwendung eines Versteifungsstreifens führt dagegen im Vergleich zu einer tiefgezogenen Fixierungslasche zu einer Gewichtseinsparung. Ferner läßt sich die von dem Versteifungsstreifen verstärkte Fixierungslasche mit einem sehr viel geringeren Kraftaufwand aus der Ebene der Rückwand des Rahmens herausbiegen als beim Tiefziehen.

Weitere Merkmale der Erfindung ergeben sich aus den Unteransprüchen.

Die Erfindung wird nachfolgend unter Bezugnahme auf zwei Ausführungsform beschrieben, die in den Zeichnungen dargestellt ist. In diesen zeigen:
- Figur 1 eine schematische Seitenansicht eines Gurtaufrollers, der mit einem erfindungsgemäßen Rahmen versehen ist;
- Figur 2 eine schematische Draufsicht auf einen erfindungsgemäßen Rahmen gemäß einer ersten Ausführungsform mit der Fixierungslasche in einem ersten Zustand;
- Figur 3 den Rahmen von Figur 2 mit der Fixierungslasche in einem zweiten Zustand;
- Figur 4 eine schematische Draufsicht auf einen erfindungsgemäßen Rahmen gemäß einer zweiten Ausführungsform mit der Fixierungslasche in einem ersten Zustand;
- Figur 5 den Rahmen von Figur 4 mit der Fixierungslasche in einem zweiten Zustand; und
- Figur 6 in einer schematischen Seitenansicht einen Gurtaufroller mit einem Rahmen nach dem Stand der Technik.

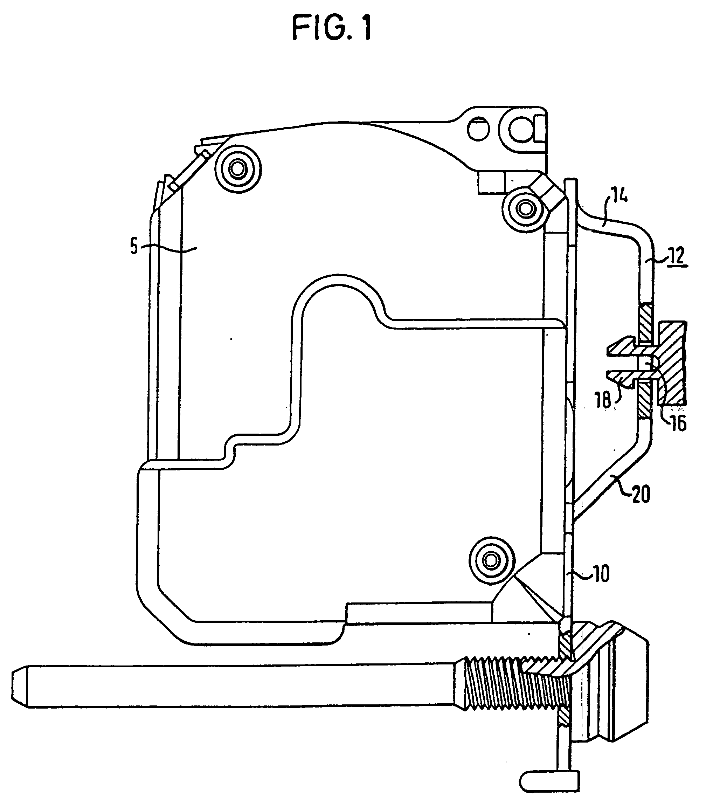

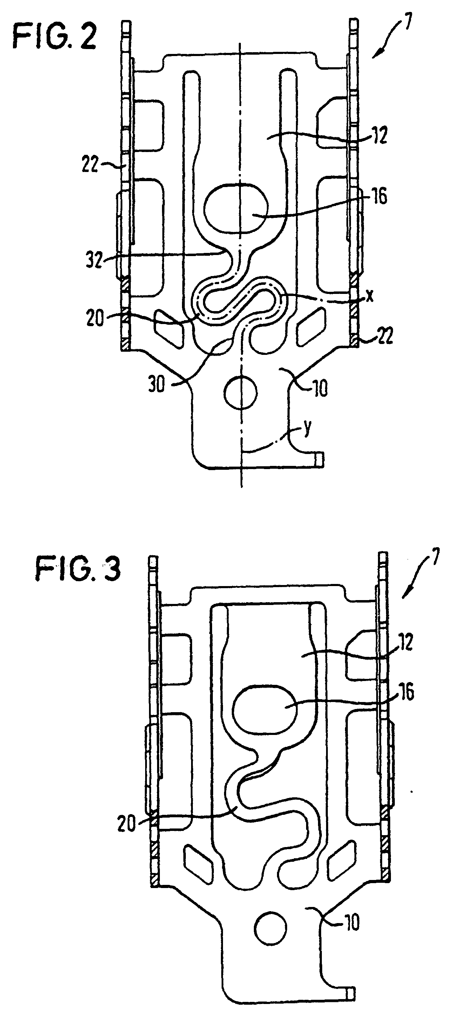

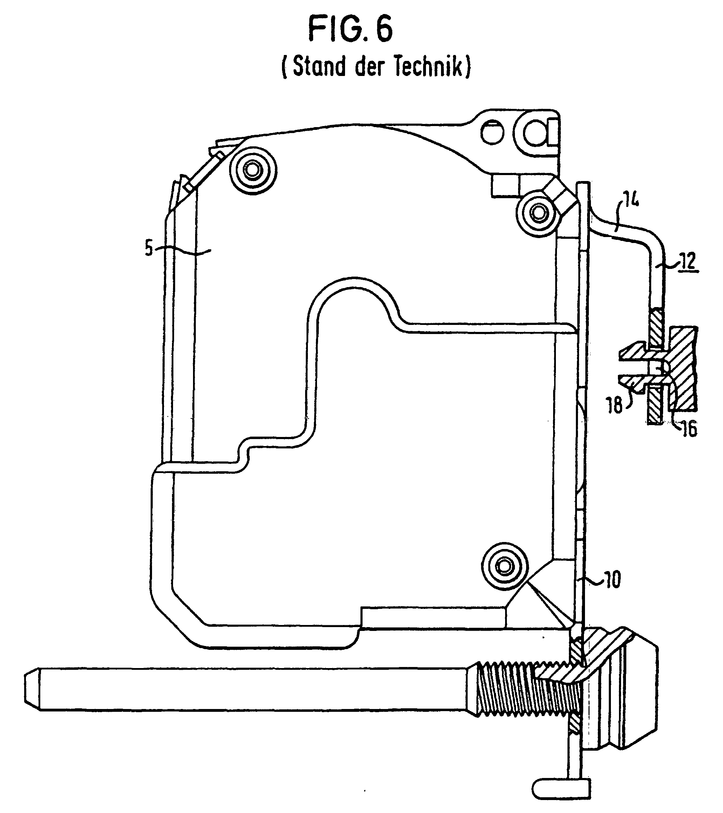

In den Figuren 1 und 6 ist in einer schematischen Seitenansicht ein Gurtaufroller 5 für ein Fahrzeug-Sicherheitsgurtsystem dargestellt. Dieser Gurtaufroller weist einen Rahmen 7 (siehe auch Figur 2) auf, von dem in den Figuren 1 und 6 lediglich die Rückwand 10 zu sehen ist. An der Rückwand 10 ist eine Fixierungslasche 12 ausgebildet, die über einen Verbindungsabschnitt 14 mit dem Rahmen verbunden ist. Bei dem Rahmen gemäß dem Stand der Technik (siehe Figur 6) ist nur ein Ende der Fixierungslasche 12 mit dem Rahmen verbunden. Auf der vom Verbindungsabschnitt 14 abgewandten Seite der Fixierungslasche ist eine Öffnung 16 vorgesehen, in die ein schematisch dargestellter Klips 18 eingreifen kann, um den Rahmen und damit den Gurtaufroller während der Montage am Fahrzeug zu fixieren.

In Figur 1 ist ein erfindungsgemäßer Rahmen dargestellt. Der Unterschied zu dem in Figur 6 dargestellten Rahmen gemäß dem Stand der Technik besteht darin, daß das von dem Verbindungsabschnitt 14 abgewandte Ende der Fixierungslasche 12 mit einem Versteifungsstreifen 20 verbunden ist. Dieser Versteifungsstreifen 20 stabilisiert die Fixierungslasche 12 und verhindert, daß sich beim Transport von mehreren mit der Fixierungslasche 12 versehenen Rahmen bzw. Gurtaufrollern die Fixierungslaschen ineinander verhaken. Aufgrund des Versteifungsstreifens 20 weist jede Fixierungslasche 12 kein freies Ende mehr auf, das hinter eine andere Fixierungslasche greifen könnte.

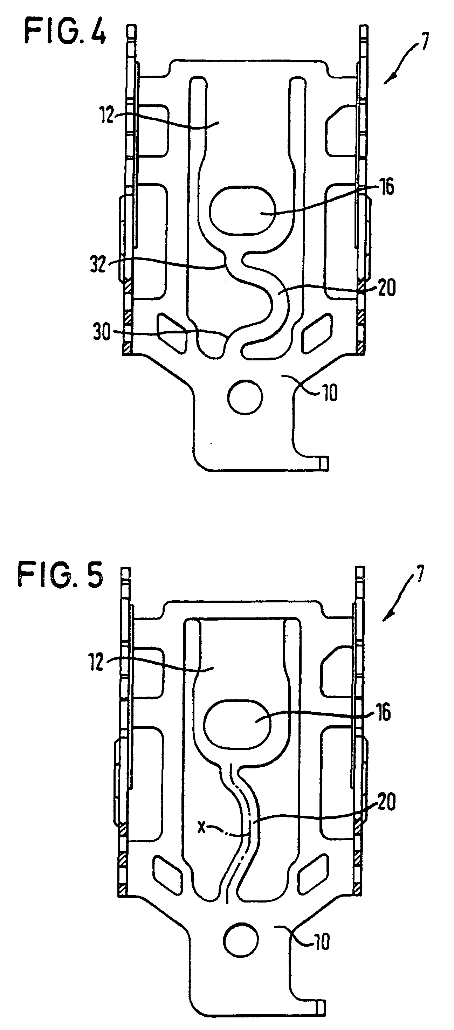

Anhand der Figuren 2 bis 5 wird nun beschrieben, wie die Fixierungslasche ausgehend von einem Zustand nach dem Stanzen der Rückwand 10 des Rahmens 7 in die in Figur 1 dargestellte Gestalt gebracht wird, wobei in den Figuren 2 und 3 ein erfindungsgemäßer Rahmen gemäß einer ersten Ausführungsform und in den Figuren 4 und 5 ein erfindungsgemäßer Rahmen gemäß einer zweiten Ausführungsform gezeigt ist.

In Figur 2 ist der Rahmen 7 mit der Rückwand 10 und zwei sich ausgehend von dieser erstreckenden Seitenteilen 22 zu sehen. Die Seitenteile 22 erstrecken sich bei dieser Darstellung senkrecht zur Zeichenebene in Richtung des Betrachters. Die Fixierungslasche 12 wird zusammen mit dem Versteifungsstreifen 20 aus dem Material der Rückwand 10 herausgestanzt. Unmittelbar nach dem Stanzen erstreckt sich die Fixierungslasche 12 zusammen mit dem Versteifungsstreifen 20 in derselben Ebene wie die Rückwand 10. Dies entspricht dem in Figur 2 dargestellten Stadium. Es ist zu sehen, daß der Versteifungsstreifen 20 mäanderförmig zwischen seinem mit der Rückwand 10 verbundenen Ende 30 und seinem mit der Fixierungslasche 12 verbundenen Ende 32 verläuft; die Mittellinie x des Versteifungsstreifens 20 verläuft also nach Art einer Schlangenlinie um eine Mittelachse y der Rückwand 10 herum. Die Länge des Versteifungsstreifens 20, gemessen entlang der Mittellinie x, ist also deutlich länger als die Entfernung zwischen dem Ende 30 und dem Ende 32 des Versteifungsstreifens 20, gemessen parallel zur Mittelachse y. Ausgehend von diesem Stadium wird die Fixierungslasche 12 aus der Ebene der Rückwand herausgebogen, und zwar zu der von den Seitenteilen abgewandten Seite hin. Bei der in Figur 2 gewählten Darstellung wird die Fixierungslasche also senkrecht zur Zeichenebene vom Betrachter weg gebogen. Dabei entfernt sich das mit der Fixierungslasche 12 verbundene Ende 32 des Versteifungsstreifens 20 von seinem mit der Rückwand 10 verbundenen Ende 30; der Versteifungsstreifen 20 wird also gestreckt. In Figur 3 ist der Zustand mit vollständig herausgebogener Fixierungslasche 12 dargestellt. Es ist zu sehen, daß der Verstreifungsstreifen 20 sich mit geringeren Krümmungen zwischen seinen beiden Enden 30 und 32 erstreckt. Die in den Figuren 2 und 3 gezeigte Gestaltung des Versteifungsstreifens 20 wird bevorzugt dann verwendet, wenn die Fixierungslasche vergleichsweise weit aus der Ebene der Rückwand herausgebogen werden soll. Im herausgebogenen Zustand wird die Fixierungslasche 12 vom Versteifungsstreifen 20 abgestützt.

In Figur 4 ist der Rahmen 7 mit einem Versteifungsstreifen 20 gemäß einer zweiten Ausführungsform zu sehen. Auch bei dieser Ausführungsform wird die Fixierungslasche 12 zusammen mit dem Versteifungsstreifen 20 aus dem Material der Rückwand 10 herausgestanzt, so daß sich die Fixierungslasche 12 unmittelbar nach dem Stanzen zusammen mit dem Versteifungsstreifen 20 in derselben Ebene wie die Rückwand 10 erstreckt. Die zweite Ausführungsform unterscheidet sich von der ersten Ausführungsform dadurch, daß der Versteifungsstreifen 20 nur in einer Biegung zwischen seinem mit der Rückwand 10 verbundenen Ende 30 und seinem mit der Fixierungslasche 12 verbundenen Ende 32 verläuft; die Mittellinie x des Versteifungsstreifens 20 ist also, abgesehen von den Bereichen in der Nähe der Enden 30 und 32, nur in einer Richtung gekrümmt. Auch bei dieser Ausführungsform ist die Länge des Versteifungsstreifens 20, gemessen entlang der Mittellinie x, deutlich länger als die Entfernung zwischen dem Ende 30 und dem Ende 32 des Versteifungsstreifens 20, gemessen parallel zur Mittelachse y. Wenn die Fixierungslasche 12 aus der Ebene der Rückwand herausgebogen wird, entfernt sich das mit der Fixierungslasche 12 verbundene Ende 32 des Versteifungsstreifens 20 von seinem mit der Rückwand 10 verbundenen Ende 30; der Versteifungsstreifen 20 wird also gestreckt. In Figur 5 ist der Zustand mit vollständig herausgebogener Fixierungslasche 12 dargestellt. Die beiden Enden 30 bzw. 32 des Versteifungsstreifens 20 sind nun so weit voneinander entfernt, daß der Versteifungsstreifen annähernd geradegezogen wurde. Es ist lediglich eine geringfügige Restkrümmung der Mittellinie x zu sehen. Auch in diesem Zustand wird die Fixierungslasche 12 optimal vom Versteifungsstreifen 20 abgestützt.

Die in den Figuren 4 und 5 gezeigte Gestaltung des Versteifungsstreifens 20 wird bevorzugt dann verwendet, wenn die Fixierungslasche vergleichsweise wenig aus der Ebene der Rückwand herausgebogen werden soll. Ein Unterschied zwischen der ersten und der zweiten Ausführungsform besteht darin, daß bei der zweiten Ausführungsform der Versteifungsstreifen 20 bezüglich der Achse y außermittig mit der Rückwand 10 bzw. der Fixierungslasche 12 verbunden ist. Dies ist ohne Einfluß auf das Strecken des Versteifungsstreifen 20, führt jedoch beim Stanzen zu verbesserten Möglichkeiten hinsichtlich des Schneidspalts und der Mindestbreite des Versteifungsstreifen.

## Patentansprüche

1. Rahmen (7) für einen Gurtaufroller eines Fahrzeug-Sicherheitsgurtsystems, mit zwei Seitenteilen (22), einer diese miteinander verbindenden Rückwand (10) und einer Fixierungslasche (12), deren eines Ende mit der Rückwand (10) verbunden ist,
**dadurch gekennzeichnet, daß** das zweite Ende der Fixierungslasche (12) mit einem Versteifungsstreifen (20) versehen ist, der wiederum mit der Rückwand (10) verbunden ist.

2. Rahmen nach Anspruch 1, **dadurch gekennzeichnet, daß** sich die Fixierungslasche (12) in derselben Ebene wie die Rückwand (10) erstreckt.

3. Rahmen nach Anspruch 2, **dadurch gekennzeichnet, daß** die Länge des Versteifungsstreifens (20), gemessen entlang seiner Mittellinie (x), länger als die Entfernung zwischen dem mit der Fixierungslasche (12) verbundenen Ende (32) und dem mit der Rückwand (10) verbundenen Ende (30) des Versteifungsstreifens (20) ist.

4. Rahmen nach Anspruch 3, **dadurch gekennzeichnet, daß** sich der Versteifungsstreifen (20) zwischen seinem mit der Fixierungslasche (12) verbundenen Ende (32) und seinem mit der Rückwand (10) verbundenen Ende (30) in derselben Ebene wie die Rückwand (10) erstreckt.

5. Rahmen nach Anspruch 4, **dadurch gekennzeichnet, daß** der Versteifungsstreifen (20) zwischen seinem mit der Fixierungslasche (12) verbundenen Ende (32) und seinem mit der Rückwand (10) verbundenen Ende (30) mäanderformig verläuft.

6. Rahmen nach Anspruch 1, **dadurch gekennzeichnet, daß** sich die Fixierungslasche (12) bezüglich der Ebene der Rückwand (10) auf der von den Seitenteilen (22) abgewandten Seite erstreckt.

7. Rahmen nach Anspruch 6, **dadurch gekennzeichnet, daß** sich die Fixierungslasche (12), abgesehen von einem Verbindungsabschnitt (14), der das erste Ende der Fixierungslasche (12) mit der Rückwand (10) verbindet, parallel zu der Ebene der Rückwand (10) erstreckt.

8. Rahmen nach einem der Ansprüche 6 und 7, **dadurch gekennzeichnet, daß** der Versteifungsstreifen (20) zwischen seinem mit der Fixierungslasche (12) verbundenen Ende (32) und seinem mit der Rückwand (10) verbundenen Ende (30) im wesentlichen langgestreckt verläuft.

9. Rahmen nach Anspruch 8, **dadurch gekennzeichnet, daß** der Versteifungsstreifen (20), betrachtet in einer zur Ebene der Rückwand (10) senkrechten Richtung, zwischen seinem mit der Fixierungslasche (12) verbundenen Ende (32) und seinem mit der Rückwand (10) verbundenen Ende (30) in nur einer Richtung gekrümmt ist.

10. Rahmen nach Anspruch 1, **dadurch gekennzeichnet, daß** er ausgehend von ebenem Blech gestanzt und gebogen ist, wobei der Versteifungsstreifen (20) durch Strecken eines S-förmig oder C-förmig gekrümmten Teils erhalten wurde.

## Claims

1. A frame (7) for a belt retractor of a vehicular seat belt system, including two side parts (22), a rear wall (10) connecting said side parts to each other, and a positioning strap (12), the one end of which is connected to the rear wall (10),
**characterized in that** the second end of said positioning strap (12) is provided with a stiffening strip (20) which in turn is connected to said rear wall (10).

2. The frame as set forth in claim 1, **characterized in that** said positioning strap (12) extends in the same plane as said rear wall (10).

3. The frame as set forth in claim 2, **characterized in that** the length of said stiffening strip (20), as measured along its centerline (x), is longer than the distance between the end (32) connected to said positioning strap (12) and the end (30) of said stiffening strip (20) connected to said rear wall (10).

4. The frame as set forth in claim 3, **characterized in that** said stiffening strip (20) extends between its end (32) connected to said positioning strap (12) and its end (30) connected to said rear wall (10) in the same plane as said rear wall (10).

5. The frame as set forth in claim 4, **characterized in that** said stiffening strip (20) extends meander-like between its end (32) connected to said positioning strap (12) and its end (30) connected to said rear wall (10).

6. The frame as set forth in claim 1, **characterized in that** relative to the plane of said rear wall (10) said positioning strap (12) extends on the side facing away from said side parts (22).

7. The frame as set forth in claim 6, **characterized in that** said positioning strap (12) extends parallel to the plane of said rear wall (10) except for a connecting portion (14) connecting the first end of said positioning strap (12) to said rear wall (10).

8. The frame as set forth in either one of claims 6 and 7, **characterized in that** said stiffening strip (20) is oriented substantially elongated between its end (32) connected to said positioning strap (12) and its end (30) connected to said rear wall (10).

9. The frame as set forth in claim 8, **characterized in that** said stiffening strip (20) is curved in only one direction between its end (32) connected to said positioning strap (12) and its end (30) connected to said rear wall (10), when viewed in a direction perpendicular to the plane of said rear wall (10).

10. The frame as set forth in claim 1, **characterized in that** said frame is stamped and bent starting from a flat sheet of metal, said stiffening strip (20) being obtained by stretching an S-shaped or C-shaped curved part.

## Revendications

1. Cadre (7) pour un enrouleur de ceinture d'un système de ceinture de sécurité de véhicule, comprenant deux parties latérales (22), une paroi arrière (10) qui les relie entre elles, et une patte de blocage (12) dont l'une des extrémités est reliée à la paroi arrière (10), **caractérisé en ce que** la deuxième extrémité de la patte de blocage (12) est munie d'une bande raidisseuse (20) qui est elle aussi reliée à la paroi arrière (10).

2. Cadre selon la revendication 1, **caractérisé en ce que** la patte de blocage (12) s'étend dans le même plan que la paroi arrière (10).

3. Cadre selon la revendication 2, **caractérisé en ce que** la longueur de la bande raidisseuse (20), mesurée suivant son axe médian (x), est supérieure à la distance existant entre son extrémité (32) reliée à la patte de blocage (12) et l'extrémité (30) de la bande raidisseuse (20) reliée à la paroi arrière (10).

4. Cadre selon la revendication 3, **caractérisé en ce que**, entre son extrémité (32) reliée à la patte de blocage (12) et son extrémité (30) reliée à la paroi arrière (10), la bande raidisseuse (20) s'étend dans le même plan que la paroi arrière (10).

5. Cadre selon la revendication 4, **caractérisé en ce que**, entre son extrémité (32) reliée à la patte de blocage (12) et son extrémité (30) reliée à la paroi arrière (10), la bande raidisseuse (20) présente un tracé en méandres.

6. Cadre selon la revendication 1, **caractérisé en ce que**, par rapport au plan de la paroi arrière (10), la patte de blocage (12) s'étend sur le côté situé à l'opposé des parties latérales (22).

7. Cadre selon la revendication 6, **caractérisé en ce que**, hormis une portion de liaison (14) reliant la première extrémité de la patte de blocage (12) à la paroi arrière (10), la patte de blocage (12) s'étend parallèlement au plan de la paroi arrière (10).

8. Cadre selon l'une des revendications 6 et 7, **caractérisé en ce que**, entre son extrémité (32) reliée à la patte de blocage (12) et son extrémité (30) reliée à la paroi arrière (10), la bande raidisseuse (20) présente un tracé sensiblement rectiligne.

9. Cadre selon la revendication 8, **caractérisé en ce que**, vue perpendiculairement au plan de la paroi arrière (10), la bande raidisseuse (20) n'est coudée que dans une seule direction entre son extrémité (32) reliée à la patte de blocage (12) et son extrémité (30) reliée à la paroi arrière (10).

10. Cadre selon la revendication 1, **caractérisé en ce qu'**il est réalisé par estampage et pliage à partir d'une tôle plane, la bande raidisseuse (20) étant obtenue par étirage d'une pièce coudée en forme de S ou de C.
